(19) **Europäisches Patentamt** / **European Patent Office** / **Office européen des brevets**

(11) **EP 2 731 809 B1**

(12) **FASCICULE DE BREVET EUROPEEN**

(45) Date de publication et mention de la délivrance du brevet:
**09.09.2015 Bulletin 2015/37**

(21) Numéro de dépôt: **12735286.2**

(22) Date de dépôt: **11.07.2012**

(51) Int Cl.:
*B60C 9/20* (2006.01)  *B60C 9/22* (2006.01)

(86) Numéro de dépôt international:
**PCT/EP2012/063577**

(87) Numéro de publication internationale:
**WO 2013/007748 (17.01.2013 Gazette 2013/03)**

(54) **PNEUMATIQUE COMPORTANT UNE COUCHE D' ELEMENTS DE RENFORCEMENT CIRCONFERENTIELS**

REIFEN MIT EINER SCHICHT AUS UMLAUFENDEN VERSTÄRKUNGSELEMENTEN

TYRE COMPRISING A LAYER OF CIRCUMFERENTIAL REINFORCING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2011 FR 1156358**

(43) Date de publication de la demande:
**21.05.2014 Bulletin 2014/21**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **SALLAZ, Gilles**
  **F-63040 Clermont-Ferrand Cedex 9 (FR)**
- **DOMINGO, Alain**
  **F-63040 Clermont-Ferrand Cedex 9 (FR)**
- **BARBARIN, François**
  **F-63040 Clermont-Ferrand Cedex 9 (FR)**
- **LARDJANE, Aurore**
  **F-63040 Clermont-Ferrand Cedex 9 (FR)**
- **RADULESCU, Robert, Ciprian**
  **F-63040 Clermont-Ferrand Cedex 9 (FR)**

(74) Mandataire: **Le Cam, Stéphane Georges Elie**
**Manufacture Francaise des Pneumatiques Michelin**
**23, place des Carmes-Déchaux**
**DGD/PI - F35 - Ladoux**
**63040 Clermont-Ferrand Cedex 9 (FR)**

(56) Documents cités:
**EP-A1- 0 730 987    EP-A1- 1 852 276**
**FR-A1- 2 939 722    US-A- 3 240 249**

**Description**

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former une spire dont l'angle de pose par rapport à la direction circonférentielle est inférieur à 8°. Les câbles initialement fabriqués sont enduits d'un mélange caoutchouteux avant d'être mis en place. Ce mélange caoutchouteux vient ensuite pénétrer le câble sous l'effet de la pression et de la température lors de la cuisson du pneumatique.

Quelles que soient les solutions envisagées telles que présentées précédemment, la présence d'une couche d'éléments de renforcement supplémentaire conduit à une masse plus importante du pneumatique et à des coûts de fabrication des pneumatiques plus importants.

Le document WO 10/069676 propose une couche d'éléments de renforcement circonférentiels répartis selon un pas variable. Selon les pas choisis, plus espacés dans les parties centrale et intermédiaires de la couche d'éléments de renforcement circonférentiels, il est possible de réaliser des pneumatiques dont les performances en termes d'endurance sont satisfaisantes. Par rapport à un pneumatique comportant une couche d'éléments de renforcement circonférentiels répartis selon un pas constant, il est possible de diminuer la masse et le coût bien qu'il soit nécessaire de combler l'absence d'éléments de renforcement par des masses polymériques.

D'autres façons de limiter l'augmentation de la masse du pneumatique en présence d'une nappe additionnelle d'éléments de renforcement circonférentiels peuvent consister soit à supprimer la nappe dite de triangulation par rapport à des configurations plus usuelles, soit à alléger les nappes sommet de travail, voire même à la combinaison de ces deux possibilités. L'allègement des nappes sommet de travail peut alors s'obtenir par exemples par une augmentation du pas de répartition des câbles ou bien par l'utilisation d'éléments de renforcement de plus petit diamètre et de moindre section comme cela est par exemple décrit dans le document US-3240249. A noter que très souvent cette réduction de diamètre et de section des éléments de renforcement s'accompagne d'une augmentation de la ténacité de l'acier venant limiter ou compenser la pénalisation en termes de force rupture.

La nappe additionnelle d'éléments de renforcement circonférentiels, lors de roulages prolongés à vitesse élevée, est sujette à un mécanisme de fatigue, principalement sensible en bord de nappe, pouvant conduire à la rupture des câbles. De telles ruptures peuvent être évitées ou tout au moins limitées par un ajustement du module d'une telle nappe additionnelle qui permet de limiter les tensions maximales supportées par les câbles. Cet ajustement du module peut par exemple être obtenu par l'utilisation de câbles de type élastique.

Par ailleurs, lors d'un roulage accidentel sur un obstacle ponctuel de taille relativement importante, l'ensemble des nappes est soumis brutalement à une très grande déformation qui peut aller jusqu'à la rupture complète du bloc sommet. Ce type de dommage d'origine accidentelle est classiquement qualifié de « road hazard ».

Il s'avère que la tenue aux road hazards d'un pneumatique comportant des nappes sommet de travail allégées, en présence d'une nappe additionnelle d'éléments de renforcement circonférentiels, telles que décrites précédemment, peut s'avérer très significativement amoindrie. En effet, moins sollicitée en raison de son plus faible module, la nappe additionnelle d'éléments de renforcement circonférentiels contribue peu à la reprise des efforts supplémentaires engendrés par la très grande déformation. L'essentiel de ceux-ci est alors supporté par les nappes sommet de travail qui, étant allégées, se révèlent fortement sensibilisées au risque de rupture.

Par ailleurs, le document EP 0 730 987 A1 décrit des nappes de travail de rigidités différentes avec des éléments de renforcement inclinés avec des angles différents et des pas de pose différents.

Un but de l'invention est de fournir des pneumatiques pour véhicules "Poids-Lourds", dont le compromis entre les performances d'endurance, de tenue aux road hazards et de masse est optimisé par rapport à celui des pneumatiques tels que décrits précédemment.

Ce but est atteint selon l'invention par un pneumatique à armature de carcasse radiale comprenant une armature de sommet formée d'au moins deux couches de sommet de travail d'éléments de renforcement, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels, les éléments de renforcement desdites au moins deux couches de sommet de travail présentant un diamètre d inférieur ou égal à 1.1 mm et satisfaisant les relations suivantes :

$$(Fr \times 4 \cos^2\alpha) / (P \times 0.75 \, Pg \times \varnothing) < 5,$$

$$Fr_1 / (P_1 \times \sin|\alpha_1|) \geq 1.2 \, Fr_2 / (P_2 \times \sin|\alpha_2|)$$

avec, $Fr_i$, la force rupture des éléments de renforcement de la couche i mesurée sur des éléments de renforcement extraits du pneumatique, exprimée en daN,

$Fr = (Fr_1 + Fr_2) / 2$, la force rupture moyenne des éléments de renforcement desdites au moins deux couches,

$\alpha_i$, l'angle formé entre les éléments de renforcement de la couche de sommet de travail i et la direction circonférentielle au niveau du plan équatorial,

$\alpha = (|\alpha_1| + |\alpha_2|) / 2$, l'angle moyen desdites au moins deux couches,

Pi, le pas de répartition, au niveau du plan équatorial, des éléments de renforcement de la couche de sommet de travail i, exprimé en mm,

$P = (P_1 + P_2) / 2$, le pas moyen desdites au moins deux couches,

Pg, la pression de gonflage nominale du pneumatique, exprimée en $daN/mm^2$,

Ø, le diamètre interne du pneumatique mesuré dans le plan équatorial, exprimé en mm.

De préférence selon l'invention, les éléments de renforcement desdites au moins deux couches de sommet de travail présentant un diamètre d inférieur ou égal à 1 mm.

Au sens de l'invention, l'angle moyen $\alpha$ correspond à la moyenne des valeurs absolues des angles $\alpha_i$ formés entre les éléments de renforcement desdites au moins deux couches de sommet de travail et la direction circonférentielle dans le plan équatorial. Les angles $\alpha_i$ sont mesurés sur un pneumatique non monté.

Au sens de l'invention, le pas dans une partie de la couche d'éléments de renforcement est la distance entre deux éléments de renforcement consécutifs. Elle est mesurée entre les axes longitudinaux desdits éléments de renforcement selon une direction perpendiculaire à au moins l'un desdits axes longitudinaux. Les pas Pi desdites au moins deux couches de sommet de travail sont mesurés sur un pneumatique non monté.

Le diamètre interne Ø est mesuré sur un pneumatique monté et gonflé à la pression de gonflage nominale Pg.

Le diamètre d des éléments de renforcement desdites au moins deux couches de travail est mesuré sur des éléments de renforcements extraits du pneumatique et préalablement dégagés de tout résidu polymérique externe.

Les résultats obtenus avec des pneumatiques conformes à l'invention ont effectivement mis en évidence qu'à performances au moins équivalentes en termes d'endurance, les pneumatiques selon l'invention présentent une masse inférieure tout en ayant une tenue satisfaisante aux road hazards. En effet, la réduction du diamètre des éléments de renforcement des couches de travail comparé à celui desdits éléments de renforcement dans les pneumatiques usuels conduit à un gain en masse tout à fait notable. Le diamètre usuel desdits éléments de renforcement est habituellement supérieur à 1.3 mm. La relation $(Fr \times 4 \cos^2\alpha) / (P \times 0.75 \, Pg \times \varnothing) < 5$ traduit quant à elle une condition selon laquelle les inventeurs jugent suffisant l'apport en termes de rigidité circonférentielle par les couches de travail notamment au sommet du pneumatique en prenant en compte la présence d'au moins une couche d'éléments de renforcement orientés circonférentiellement. Alors que les pneumatiques usuels sont formés classiquement de deux nappes sommet de travail identiques, c'est-à-dire constituées des mêmes câbles disposés aux mêmes pas, croisées d'une couche à l'autre et se distinguant éventuellement par des angles légèrement différents par rapport à la direction circonférentielle, la relation $Fr_1 / (P_1 \times \sin|\alpha_1|) \geq 1.2 \, Fr_2 / (P_2 \times \sin|\alpha_2|)$ exprime une différenciation des deux couches de sommet de travail visant à équilibrer la contribution de chacune des deux couches de sommet de travail à la reprise des efforts en très grande déformation pour repousser le seuil de rupture du bloc sommet lors d'un road hazard.

Les inventeurs ont encore su mettre en évidence que l'allègement de l'armature sommet du pneumatique s'associe à une diminution de son épaisseur du fait de la réduction du diamètre des éléments de renforcement des couches de travail. Cette diminution de l'épaisseur de l'armature de travail s'associe à des épaisseurs de mélange polymériques réduites par rapport à celles des pneumatiques usuels et permet ainsi de diminuer les dissipations thermiques lors des roulages des pneumatiques. Les pneumatiques selon l'invention présentent ainsi une résistance au roulement réduite. En outre, la diminution des températures et notamment celle au niveau des épaules du pneumatique permet de diminuer les risques d'apparition de fissures au niveau des extrémités des couches de travail et donc contribue aux performances en termes d'endurance.

Les inventeurs ont également mis en évidence que la diminution de la rigidité circonférentielle résultant de l'allègement des couches de travail permet de réduire ladite rigidité circonférentielle globale de l'armature sommet du pneumatique et notamment de réduire celle-ci au centre du pneumatique, c'est-à-dire autour du plan équatorial, et ainsi permet d'améliorer les propriétés du pneumatique en termes d'usure. En effet, l'apparition d'inhomogénéités d'usure entre le centre et le bord de la bande de roulement apparaissant dans certaines conditions de roulage est diminuée par rapport à ce que l'on peut observer sur des conceptions plus usuelles. La diminution des diamètres des éléments de renforcement desdites au moins deux couches de travail permet encore de diminuer la sensibilité du pneumatique aux agressions de la bande de roulement, l'architecture sommet étant selon l'invention globalement plus souple qu'avec des pneumatiques plus usuels.

Selon un mode de réalisation préféré de l'invention, les éléments de renforcement desdites au moins deux couches de travail sont des éléments de renforcements inextensibles. De préférence encore, il s'agit de câbles métalliques.

Selon une variante avantageuse de l'invention, les éléments de renforcement desdites au moins deux couches de travail sont des câbles métalliques à couches saturées présentant au test dit de perméabilité un débit inférieur à 5 cm³/mn.

Au sens de l'invention, une couche saturée d'un câble à couches est une couche constituée de fils dans laquelle il n'existe pas suffisamment de place pour y ajouter au moins un fil supplémentaire.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit. Dans le cas de câbles frettés, on réalise le test après avoir enlevé le filé retordu ou non utilisé comme brin de frette.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Des câbles présentant au test dit de perméabilité un débit inférieur à 2 cm3/mn présentent un taux de pénétration supérieure à 90%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Les inventeurs ont su mettre en évidence qu'un pneumatique ainsi réalisé selon l'invention conduit à des améliorations en termes d'endurance notamment lorsque celui-ci est soumis à des contraintes excessives.

De préférence encore selon l'invention, les câbles desdites au moins deux couches de travail présentent au test dit de perméabilité un débit inférieur à 2 cm³/mn.

Selon un mode de réalisation avantageux de l'invention, lesdits éléments de renforcement métalliques présentant au test dit de perméabilité un débit inférieur 5 cm³/mn desdites au moins deux couches de travail sont des câbles à au moins deux couches saturées, au moins une couche interne étant gainée d'une couche constituée d'une composition polymérique telle qu'une composition de caoutchouc réticulable ou réticulée, de préférence à base d'au moins un élastomère diénique.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine est réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

De préférence, la composition de la gaine de caoutchouc présente, à l'état réticulé, un module sécant en extension à 10% d'allongement (noté M10), mesuré selon la norme ASTM D 412 de 1998, inférieur à 20 MPa et plus préférentiellement inférieur à 12 MPa, en particulier entre 4 et 11 MPa.

A titre préférentiel, la composition de cette gaine est choisie identique à la composition utilisée pour la couche de calandrage de la couche de sommet de travail que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, les éléments de renforcement, desdites au moins deux couches de travail, présentant au test dit de perméabilité un débit inférieur à 5 $cm^3$/mn sont des câbles métalliques à couches de construction [L+M], comportant une première couche C1 à L fils de diamètre $d_1$ enroulés ensemble en hélice selon un pas $p_1$ avec L allant de 1 à 4, entourée d'une couche C2 à M fils de diamètre $d_2$ enroulés ensemble en hélice selon un pas $p_2$ avec M allant de 3 à 12, une gaine constituée d'une composition de caoutchouc réticulable ou réticulée à base d'au moins un élastomère diénique, recouvrant ladite première couche C1.

De préférence, le diamètre des fils de la première couche de la couche interne C1 est compris entre 0.10 et 0.5 mm et le diamètre des fils de la couche externe C2 est compris entre 0.10 et 0.5 mm.

De préférence encore, le pas d'hélice $p_2$ d'enroulement desdits fils de la couche externe C2 est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'hélice d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :

- la couche C2 est une couche saturée, c'est-à-dire qu'il n'existe pas suffisamment de place dans cette couche pour y ajouter au moins un (N+1)ème fil de diamètre $d_2$, N représentant alors le nombre maximal de fils enroulables en une couche autour de la couche C1 ;
- la gaine de caoutchouc recouvre en outre la couche interne C1 et/ou sépare les fils deux à deux adjacents de la couche externe C2 ;
- la gaine de caoutchouc recouvre pratiquement la demi-circonférence radialement intérieure de chaque fil de la couche C2, de telle sorte qu'elle sépare les fils deux à deux adjacents de cette couche C2.

De préférence, la gaine de caoutchouc présente une épaisseur moyenne allant de 0,010 mm à 0,040 mm.

D'une manière générale, lesdits câbles selon l'invention peuvent être réalisés avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Lesdits câbles selon l'invention pourront être obtenus selon différentes techniques connues de l'homme du métier, par exemple en deux étapes, tout d'abord par gainage via une tête d'extrusion de l'âme ou couches C1, étape suivie dans un deuxième temps d'une opération finale de câblage ou retordage des M fils restants (couche C2) autour de la couche C1 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

De tels câbles d'au moins une couche de sommet de travail sont par exemple choisis parmi les câbles décrits dans les demandes de brevet WO 2006/013077 et WO 2009/083212.

Selon une variante préférée de réalisation de l'invention, les pas de répartition $P_i$ des éléments de renforcement desdites au moins deux couches de travail satisfont la relation :

$$1.6\, d_i \leq P_i \leq d_i + 1.3,$$

avec, $d_i$, les diamètres des éléments de renforcement desdites au moins deux couches de travail, exprimés en mm.

Une telle répartition des éléments de renforcement dans lesdites au moins deux couches de travail permet, notamment lors de roulages particulièrement sévères sous forte dérive, d'optimiser le compromis entre l'allègement du pneumatique et ses performances en termes d'endurance de l'armature sommet.

Avantageusement encore selon l'invention, l'angle moyen $\alpha$ formé par les éléments de renforcement desdites au moins deux couches de travail avec la direction circonférentielle est supérieur à 20°. De telles valeurs d'angles permettent de limiter les contraintes de cisaillement au sein des mélanges polymériques notamment au niveau des extrémités desdites au moins deux couches de travail et donc de diminuer les dissipations thermiques lors des roulages des pneumatiques. Les pneumatiques selon l'invention présentent ainsi une résistance au roulement plus faible et une température épaule réduite qui contribue aux performances en termes d'endurance.

Selon un mode de réalisation avantageux de l'invention, les éléments de renforcement de ladite au moins une couche d'éléments de renforcement circonférentiels sont répartis sur la largeur axiale de ladite au moins une couche avec un pas variable, notamment pour contribuer à l'allègement du pneumatique. Avantageusement encore la densité d'éléments de renforcement est inférieure au centre de ladite couche d'éléments de renforcement circonférentiels par rapport à celle sur ses bords pour favoriser les performances en termes d'endurance et d'usure. Une telle couche d'éléments de renforcement circonférentiels est par exemple réalisée conformément à la description de la demande de brevet WO 2010/069676.

Au sens de l'invention, le pas dans une partie de la couche d'éléments de renforcement circonférentiels est la distance entre deux éléments de renforcement consécutifs. Elle est mesurée entre les axes longitudinaux desdits éléments de renforcement selon une direction perpendiculaire à au moins l'un desdits axes longitudinaux. Elle est donc mesurée selon une direction sensiblement axiale.

Avantageusement encore selon une variante de réalisation de l'invention, les courbures axiales des couches de renforcement de l'armature de carcasse et des couches de renforcement de l'armature de sommet sont quasiment concentriques en tous points au profil de la surface d'usure et donc à celui de la bande de roulement. Selon cette variante de réalisation de l'invention, il est encore possible d'alléger le pneumatique. En effet, les pneumatiques usuels prévoient habituellement une couche de mélange caoutchouteux complémentaire mise en place sous la bande de roulement de manière à être centrée sur le plan médian circonférentiel, la présence d'une telle couche permettant d'obtenir un rayon de la courbure axiale de la bande de roulement inférieur à celui de la courbure axiale des couches de renforcement de l'armature de sommet. Les pneumatiques réalisés selon cette variante de l'invention ne comportant pas une telle couche, peuvent ainsi être allégés. L'absence d'une telle couche peut également contribuer à limiter l'échauffement du pneumatique lors de son utilisation et donc contribuer à ses performances en termes d'endurance.

Une telle variante de réalisation de l'invention peut être réalisée avec des éléments de renforcement de ladite au moins une couche d'éléments de renforcement circonférentiels qui sont des câbles à torons présentant une réduction du module tangent maximum entre leur état initial et extraits du pneumatique supérieure à 15 GPa et de préférence supérieure à 20 GPa.

Les modules exprimés ci-dessus sont mesurés sur une courbe contrainte de traction en fonction de l'allongement, la contrainte de traction correspondant à la tension mesurée, avec une pré-tension de 5N, ramenée à la section de métal de l'élément de renforcement. Ces mesures sont effectuées en traction selon la norme ISO 6892 de 1984.

Les câbles extraits de pneumatiques sur lesquelles les mesures sont effectuées sont prélevés sur des pneumatiques dont les constituants, autres que les câbles en question, et notamment les mélanges susceptibles de pénétrer lesdits câbles sont des constituants usuels pour les applications de type pneumatiques pour poids-lourds.

De tels éléments de renforcement, de ladite au moins une couche d'éléments de renforcement circonférentiels sont par exemple décrits dans les demandes de brevet WO 2010/115891 et WO 2010/115892.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

De préférence encore, la couche de sommet de travail axialement la plus large est radialement à l'intérieur des autres couches de sommet de travail.

Selon un mode de réalisation préférée de l'invention, au moins une couche d'éléments de renforcement circonférentiels est radialement disposée entre deux couches de sommet de travail.

Une première variante de réalisation de l'invention prévoit alors, les largeurs axiales des couches de sommet de travail radialement adjacentes à la couche d'éléments de renforcement circonférentiels étant supérieures à la largeur axiale de ladite couche d'éléments de renforcement circonférentiels, que lesdites deux couches de sommet de travail ne sont pas recouplées.

Selon une autre variante de réalisation de l'invention, les largeurs axiales des couches de sommet de travail radialement adjacentes à la couche d'éléments de renforcement circonférentiels sont supérieures à la largeur axiale de ladite couche d'éléments de renforcement circonférentiels. Selon cette variante de réalisation de l'invention, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

Au sens de l'invention des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

La présence de tels couplages entre les couches de sommet de travail adjacentes à la couche d'éléments de renforcement circonférentiels permettent la diminution des contraintes de tension agissant sur les éléments circonférentiels axialement le plus à l'extérieur et situé le plus près du couplage.

L'épaisseur des profilés de découplage entre nappes de travail, mesurée au droit des extrémités de la nappe de travail la moins large, sera au moins égale à deux millimètres, et préférentiellement supérieure à 2,5 mm.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement, la contrainte de traction correspondant à la tension mesurée, avec une pré-tension de 5N, ramenée à la section de métal de l'élément de renforcement.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,4% et 0,7%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de construction 3x(0.26+6x0.23) 5.0/7.5 SS. Un tel câble présente un module sécant à 0,7 % égal à 45 GPa et un module tangent maximum égal à 100 GPa, mesurés sur une courbe contrainte de traction en fonction de l'allongement, la contrainte de traction correspondant à la tension mesurée, avec une pré-tension de 5N, ramenée à la section de métal de l'élément de renforcement, de 0.98 mm$^2$ dans le cas de l'exemple considéré.

Selon un deuxième mode de réalisation de l'invention, les éléments de renforcement circonférentiels peuvent être formées d'éléments métalliques et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement métalliques en acier faisant, avec la direction circonférentielle, un angle supérieur à 60° et de même sens que celui de l'angle formé par les éléments de renforcement de la couche radialement la plus proche de l'armature de carcasse.

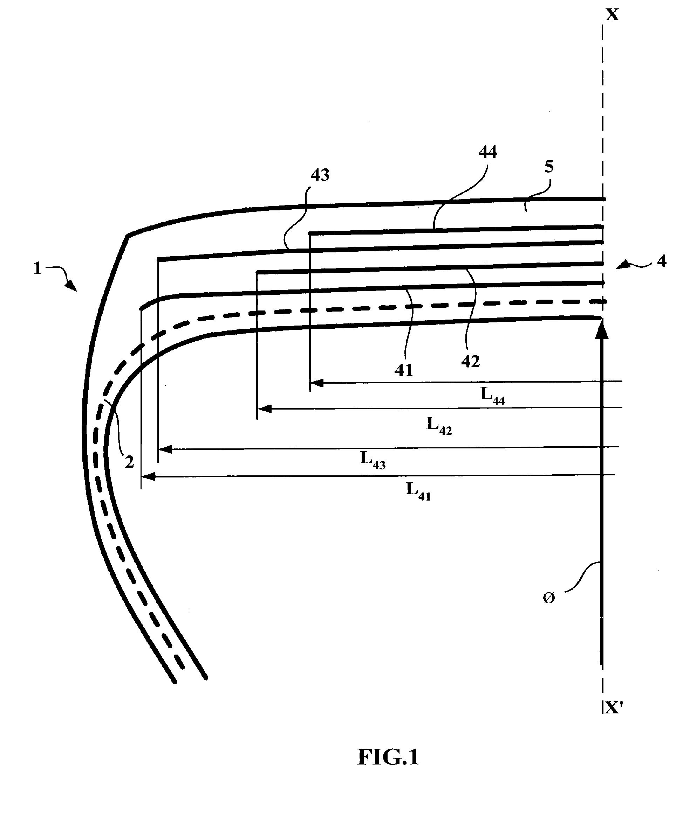

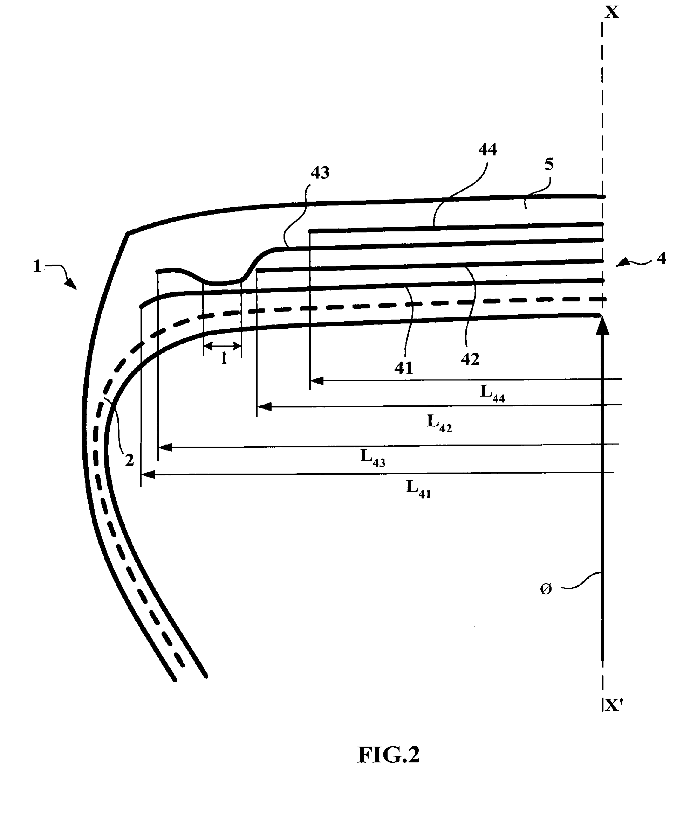

D'autres détails et caractéristiques avantageux de l'invention ressortiront ci-après de la description des exemples de réalisation de l'invention en référence aux figures 1 et 2 qui représentent :

- figure 1, une vue méridienne d'un schéma d'un pneumatique selon un mode de réalisation de l'invention,

- figure 2, une vue méridienne d'un schéma d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5, a un rapport de forme H/S égal à 0,70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :

- d'une première couche de travail 41 formée de câbles métalliques de construction 0.30 gainé + 6x0.30 15 S, présentant au test de perméabilité un débit nul, continus sur toute la largeur de la nappe et formant avec la direction circonférentielle au niveau du plan équatorial un angle égal à 18°,

- d'une couche d'éléments de renforcement circonférentiels 42 formée de câbles métalliques bi-mdules de construction 3x(0.26+6x0.23) 5/7.5 SS,

- d'une seconde couche de travail 43 formée de câbles métalliques de construction 0.30 gainé + 6x0.30 15 S, présentant au test de perméabilité un débit nul, continus sur toute la largeur de la nappe, formant avec la direction circonférentielle au niveau du plan équatorial un angle égal à 22° et croisés avec les câbles métalliques de la couche 41,

- d'une couche de protection 44 formées de câbles métalliques élastiques de construction 3x2x0.35 4/6 SS.

L'armature de sommet est elle-même coiffée d'une bande de roulement 5.

La largeur axiale maximale S du pneumatique est égale à 318 mm.

La largeur axiale $L_{41}$ de la première couche de travail 41 est égale à 252 mm.

La largeur axiale $L_{43}$ de la deuxième couche de travail 43 est égale à 232 mm.

La largeur axiale $L_{42}$ de la couche d'éléments de renforcement circonférentiels 42, elle est égale à 194 mm.

La dernière nappe de sommet 44, dite de protection, a une largeur $L_{44}$ égale à 188 mm.

Conformément à l'invention, les câbles des couches de travail 41 et 43 sont des assemblages à deux couches constitués de fils de 0.30 mm. Les câbles ainsi constitués présentent un diamètre d de 0.95 mm.

La force rupture $Fr_1$ et $Fr_2$ des câbles des couches de travail 41 et 43 est égale à 155 daN.

Le pas de répartition $P_1$ des câbles de la couche de travail 41 est égal à 1.9 mm. Il satisfait la relation 1.6 d $\leq$ $P_1 \leq$ d + 1.3, d étant égal à 0.95.

Le pas de répartition $P_2$ des câbles de la couche de travail 43 est égal à 2.1 mm. Il satisfait la relation 1.6 d $\leq$ $P_2 \leq$ d + 1.3, d étant égal à 0.95.

Le pas moyen P est égal à (1.9 + 2.1) / 2 soit 2 mm.

L'angle moyen $\alpha$ formé entre les éléments de renforcement des couches 41 et 43 et la direction circonférentielle est égal à (18° + 22°) / 2 soit 20°.

La pression de gonflage Pg du pneumatique est égale à 0.090 daN/mm$^2$.

Le diamètre interne $\varnothing$ du pneumatique mesuré dans le plan équatorial est égal à 954 mm.

Le pneumatique selon l'invention auquel on applique la relation (Fr x 4 cos$^2\alpha$) / (P x 0.75 Pg x $\varnothing$) conduit à une valeur de 4.25 et donc inférieure à 5.

La relation $Fr_i$ / ($P_1$ x sin$|\alpha_1|$) $\geq$ 1.2 $Fr_2$ / ($P_2$ x sin$|\alpha_2|$) se traduit par 264 $\geq$ 1.2* 197 = 236. La relation est donc vérifiée.

La masse cumulée des couches de travail 41 et 43 et de la couche d'éléments de renforcement circonférentiels 42, comprenant la masse des câbles métalliques et des mélanges de calandrage, se monte ainsi à 8.1 Kg.

Sur la figure 2, le pneumatique 1 diffère de celui représenté sur la figure 1 en ce que les deux couches de travail 41 et 43 sont, de chaque côté du plan équatorial et axialement dans le prolongement de la couche d'éléments de renforcement circonférentiels 42, couplées sur une largeur axiale l. Sur la largeur restante commune aux deux couches de travail, les deux couches de travail 41, 43 sont séparés par un profilé de caoutchouc, non représenté sur la figure, l'épaisseur dudit profilé étant croissante en allant de l'extrémité axiale de la zone de couplage à l'extrémité de la couche de travail la moins large. Ledit profilé a avantageusement une largeur suffisante pour recouvrir radialement l'extrémité de la couche de travail 41 la plus large, qui est, dans ce cas la couche de travail radialement la plus proche de l'armature de carcasse.

Des essais ont été réalisés avec le pneumatique réalisé selon l'invention conformément à la représentation de la figure 1 et comparés avec un pneumatique de référence identique mais réalisé selon une configuration usuelle, les câbles des couches de travail étant de formule 9.35.

Le pneumatique de référence présente une architecture semblable. à celui de l'invention dans laquelle les éléments de renforcement des couches de travail sont des câbles de construction 2 + 7 x 0.35 7.5/15 SS.

Les câbles des couches de travail du pneumatique de référence présentent un diamètre d de 1.35 mm et donc supérieur à 1.1 mm.

La force rupture Fr des câbles des couches de travail du pneumatique de référence est égale à 246 daN.

Le pas de répartition P des câbles des couches de travail du pneumatique de référence est égal à 2.50 mm.

L'angle $\alpha_i$ formé entre les éléments de renforcement des couches du pneumatique de référence et la direction circonférentielle est égal à 16.0°.

La pression de gonflage Pg du pneumatique est égale à 0.090 daN/mm$^2$.

Le diamètre interne $\varnothing$ du pneumatique mesuré dans le plan équatorial est égal à 950 mm.

Le pneumatique de référence auquel on applique la relation (Fr x 4 cos$^2\alpha$) / (P x 0.75 Pg x Ø) conduit à une valeur de 5.7 et donc supérieure à 5.

La relation $Fr_1$ / ($P_1$ x sin$|\alpha_1|$) $\geq$ 1.2 $Fr_2$ / ($P_2$ x sin$|\alpha_2|$) n'est également pas vérifiée puisque les deux couches de travail présentent des propriétés similaires, si ce n'est les angles opposés.

Pour le pneumatique de référence, la masse cumulée des couches de travail 41 et 43 et de la couche d'éléments de renforcement circonférentiels 42, comprenant la masse des câbles métalliques et des mélanges de calandrage, se monte ainsi à 10.1 Kg

La fabrication du pneumatique réalisé selon l'invention comparé à celle du pneumatique de référence montre donc, sur l'ensemble des couches de travail 41 et 43 et de la couche d'éléments de renforcement circonférentiels 42, un gain en masse de 2Kg.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée au cours du roulage.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance à celles des pneumatiques de référence.

D'autres essais de roulage ont été effectués sur des sols comportant des obstacles particulièrement agressifs en termes de road hazard pour les bandes de roulement des pneumatiques.

Ces derniers essais ont montré, qu'après avoir subi les mêmes agressions en termes de road hazard, les pneumatiques selon l'invention présentent des altérations moins nombreuses et moins importantes que celles des pneumatiques de référence.

Des mesures de résistance au roulement ont en outre montré que le pneumatique selon l'invention conduit à un gain de l'ordre de 0.2 Kg/T.

D'autres pneumatiques conformes à l'invention et tout aussi performant en termes d'endurance ont été réalisés avec des câbles des couches de travail de construction 0.26 gainé + 6x0.26 15 S présentant au test de perméabilité un débit nul. Il s'agit donc de câbles à deux couches constitués de fils de 0.26 mm. Les câbles ainsi constitués présentent un diamètre d de 0.83 mm.

La force rupture Fri des câbles des couches de travail est égale à 131 daN.

Le pas de répartition $P_1$ des câbles de la couche de travail 41 est égal à 1.4 mm. Il satisfait la relation 1.6 d $\leq$ $P_1 \leq$ d + 1.3, d étant égal à 0.83.

Le pas de répartition $P_2$ des câbles de la couche de travail 43 est égal à 1.9 mm. Il satisfait la relation 1.6 d $\leq$ $P_2 \leq$ d + 1.3, d étant égal à 0.83.

Le pas moyen P est égal à (1.4 + 1.9) / 2 soit 1.65 mm.

L'angle $\alpha_1$ formé entre les éléments de renforcement de la couche 41 et la direction circonférentielle est égal à 16°.

L'angle $\alpha_2$ formé entre les éléments de renforcement de la couche 43 et la direction circonférentielle est égal à 25°.

L'angle moyen $\alpha$ formé entre les éléments de renforcement des couches 41 et 43 et la direction circonférentielle est donc égal (16 + 25) / 2 soit 20.5°.

La pression de gonflage Pg du pneumatique est égale à 0.090 daN/mm$^2$.

Le diamètre interne Ø du pneumatique mesuré dans le plan équatorial est égal à 956 mm.

Ce deuxième pneumatique ainsi réalisé selon l'invention auquel on applique la relation (Fr x 4 cos$^2\alpha$) / (P x 0.75 Pg x $\varnothing$) conduit à une valeur de 4.32 donc inférieure à 5.

La relation $Fr_1$ / ($P_1$ x sin$|\alpha_1|$) $\geq$ 1.2 $Fr_2$ / ($P_2$ x sin$|\alpha_2|$) se traduit par 339 $\geq$ 1.2* 163 = 196. La relation est donc vérifiée.

## Revendications

**1.** Pneumatique (1) à armature de carcasse radiale (2) comprenant une armature de sommet (4) formée d'au moins deux couches de sommet de travail (41, 43) d'éléments de renforcement, croisés d'une couche à l'autre en faisant avec la direction circonférentielle des angles compris entre 10° et 45°, elle-même coiffée radialement d'une bande de roulement (5), ladite bande de roulement étant réunie à deux bourrelets par l'intermédiaire de deux flancs, l'armature de sommet (4) comportant au moins une couche d'éléments de renforcement circonférentiels (42), les éléments de renforcement desdites au moins deux couches de sommet de travail (41, 43) présentant un diamètre inférieur à 1.1 mm et satisfaisant la relation suivante :

$$(\text{Fr x } 4 \cos^2\alpha) / (\text{P x } 0.75 \text{ Pg x Ø}) < 5,$$

**caractérisé en ce que** lesdits éléments de renforcement desdites au moins deux couches de sommet de travail (41, 43) satisfont la relation suivante :

$$Fr_1 / (P_1 \text{ x } \sin|\alpha_1|) \geq 1.2 \, Fr_2 / (P_2 \text{ x } \sin|\alpha_2|)$$

avec, $Fr_i$, la force rupture des éléments de renforcement de la couche i mesurée sur des éléments de renforcement extraits du pneumatique, exprimée en daN,

$Fr = (Fr_i + Fr_2) / 2$, la force rupture moyenne desdites au moins deux couches,

$\alpha_i$, l'angle formé entre les éléments de renforcement de la couche de sommet de travail i et la direction circonférentielle au niveau du plan équatorial,

$\alpha = (|\alpha_1| + |\alpha_2|) / 2$, l'angle moyen desdites au moins deux couches,

Pi, le pas de répartition, au niveau du plan équatorial, des éléments de renforcement de la couche de sommet de travail i, exprimé en mm,

$P = (P_1 + P_2) / 2$, le pas moyen desdites au moins deux couches,

Pg, la pression de gonflage nominale du pneumatique, exprimée en $daN/mm^2$,

$\varnothing$, le diamètre interne du pneumatique mesuré dans le plan équatorial, exprimé en mm.

2. Pneumatique (1) selon la revendication 1, **caractérisé en ce que** les pas de répartition Pi des éléments de renforcement desdites au moins deux couches de travail satisfont la relation :

$$1.6\, d_i \leq P_i \leq d_i + 1.3,$$

avec, $d_i$, les diamètres des éléments de renforcement desdites au moins deux couches de travail (41, 43), exprimés en mm.

3. Pneumatique (1) selon la revendication 1 ou 2, **caractérisé en ce que** l'angle moyen formé par les éléments de renforcement desdites au moins deux couches de travail (41, 43) avec la direction circonférentielle est supérieur à 20°.

4. Pneumatique (1) selon l'une des revendications 1 à 3, **caractérisé en ce que** les éléments de renforcement desdites au moins deux couches de travail (41, 43) sont des éléments de renforcements inextensibles.

5. Pneumatique (1) selon l'une des revendications 1 à 4, **caractérisé en ce que** les éléments de renforcement desdites au moins deux couches de travail (41, 43) sont des câbles métalliques à couches saturées présentant au test dit de perméabilité un débit inférieur à 5 $cm^3$/mn.

6. Pneumatique (1) selon l'une des revendications précédentes, **caractérisé en ce que** les éléments de renforcement de ladite au moins une couche d'éléments de renforcement circonférentiels (42) sont répartis sur la largeur axiale de ladite au moins une couche avec un pas variable.

7. Pneumatique (1) selon l'une des revendications précédentes, **caractérisé en ce que** la couche d'éléments de renforcement circonférentiels (42) est radialement disposée entre deux couches de sommet de travail (41, 43).

8. Pneumatique (1) selon l'une des revendications précédentes, au moins deux couches de sommet de travail (41, 43) présentant des largeurs axiales différentes, **caractérisé en ce que** la différence entre la largeur axiale de la couche de sommet de travail (41) axialement la plus large et la largeur axiale de la couche de sommet de travail (43) axialement la moins large est comprise entre 10 et 30 mm.

9. Pneumatique (1) selon la revendication 8, **caractérisé en ce que** la couche de sommet de travail (41) axialement la plus large est radialement à l'intérieur des autres couches de sommet de travail (43).

10. Pneumatique (1) selon l'une des revendications précédentes, **caractérisé en ce que** les largeurs axiales des couches de sommet de travail (41, 43) radialement adjacentes à la couche d'éléments de renforcement circonférentiels (42) sont supérieures à la largeur axiale de ladite couche d'éléments de renforcement circonférentiels (42).

11. Pneumatique (1) selon la revendication 10, **caractérisé en ce que** les couches de sommet de travail (41, 43) adjacentes à la couche d'éléments de renforcement circonférentiels (42) sont de part et d'autre du plan équatorial et dans le prolongement axial immédiat de la couche d'éléments de renforcement circonférentiels (42) couplées sur une largeur axiale (1), pour être ensuite découplées par des profilés de mélange de caoutchouc au moins sur le restant de la largeur commune aux dites deux couches de travail (41, 43).

12. Pneumatique (1) selon l'une des revendications précédentes, **caractérisé en ce que** les éléments de renforcement d'au moins une couche d'éléments de renforcement circonférentiels (42) sont des éléments de renforcement métalliques présentant un module sécant à 0,7 % d'allongement compris entre 10 et 120 GPa et un module tangent maximum inférieur à 150 GPa.

**13.** Pneumatique (1) selon l'une des revendications précédentes, **caractérisé en ce que** les éléments de renforcement d'au moins une couche d'éléments de renforcement circonférentiels (42) sont des éléments de renforcement métalliques présentant une courbe contrainte de traction en fonction de l'allongement relatif ayant des faibles pentes pour les faibles allongements et une pente sensiblement constante et forte pour les allongements supérieurs.

**14.** Pneumatique (1) selon l'une des revendications 1 à 11, **caractérisé en ce que** les éléments de renforcement d'au moins une couche d'éléments de renforcement circonférentiels (42) sont des éléments de renforcement métalliques coupés de manière à former des tronçons de longueur inférieure à la circonférence de la nappe la moins longue, mais supérieure à 0,1 fois ladite circonférence, les coupures entre tronçons étant axialement décalées les unes par rapport aux autres, le module d'élasticité à la traction par unité de largeur de la couche d'éléments de renforcement circonférentiels étant de préférence inférieur au module d'élasticité à la traction, mesuré dans les mêmes conditions, de la couche de sommet de travail la plus extensible.

**15.** Pneumatique (1) selon l'une des revendications 1 à 11, **caractérisé en ce que** les éléments de renforcement d'au moins une couche d'éléments de renforcement circonférentiels (42) sont des éléments de renforcement métalliques ondulés, le rapport a/λ de l'amplitude d'ondulation a sur la longueur d'onde λ étant au plus égale à 0,09, le module d'élasticité à la traction par unité de largeur de la couche d'éléments de renforcement circonférentiels étant de préférence inférieur au module d'élasticité à la traction, mesuré dans les mêmes conditions, de la couche de sommet de travail la plus extensible.

**Patentansprüche**

**1.** Luftreifen (1) mit radialer Karkassenbewehrung (2), der eine Scheitelbewehrung (4) enthält, die von mindestens zwei Arbeitsscheitelschichten (41, 43) von Verstärkungselementen geformt wird, die sich von einer Schicht zur anderen kreuzen, indem sie mit der Umfangsrichtung Winkel bilden, die zwischen 10° und 45° liegen, die selbst radial von einem Laufstreifen (5) überlagert wird, wobei der Laufstreifen über zwei Flanken mit zwei Wülsten verbunden ist, wobei die Scheitelbewehrung (4) mindestens eine Schicht von Umfangsverstärkungselementen (42) aufweist, wobei die Verstärkungselemente der mindestens zwei Arbeitsscheitelschichten (41, 43) einen Durchmesser von weniger als 1,1 mm haben und die folgende Beziehung erfüllen:

$$(Fr \times 4 \cos^2\alpha)/(P \times 0{,}75\ Pg \times \varnothing) < 5,$$

**dadurch gekennzeichnet, dass** die Verstärkungselemente der mindestens zwei Arbeitsscheitelschichten (41, 43) die folgende Beziehung erfüllen:

$$Fr_1/(P_1 \times \sin|\alpha_1|) \geq 1{,}2\ Fr_2/(P_2 \times \sin|\alpha_2|)$$

mit
$Fr_i$ der Bruchkraft der Verstärkungselemente der Schicht i gemessen an aus dem Luftreifen entnommenen Verstärkungselementen, ausgedrückt in daN,
$Fr = (Fr_1 + Fr_2)/2$ der mittleren Bruchkraft der mindestens zwei Schichten,
$\alpha_i$ dem zwischen den Verstärkungselementen der Arbeitsscheitelschicht i und der Umfangsrichtung im Bereich der Äquatorialebene gebildeten Winkel,
$\alpha = (|\alpha 1| + |\alpha_2|)/2$ dem mittleren Winkel der mindestens zwei Schichten,
Pi dem Verteilungsabstand, im Bereich der Äquatorialebene, der Verstärkungselemente der Arbeitsscheitelschicht i, ausgedrückt in mm,
$P = {}^2P_1 + P_2)/2$ dem mittleren Abstand der mindestens zwei Schichten,
Pg dem nominalen Luftdruck der Luftreifen, ausgedrückt in $daN/mm^2$,
$\varnothing$ dem Innendurchmesser des Luftreifens gemessen in der Äquatorialebene, ausgedrückt in mm.

**2.** Luftreifen (1) nach Anspruch 1, **dadurch gekennzeichnet, dass** die Verteilungsabstände $P_i$ der Verstärkungselemente der mindestens zwei Arbeitsschichten die folgende Beziehung erfüllen:

$$1,6 \ d_i \ \le \ P_i \ \le \ d_i \ + \ 1,3$$

mit
$d_i$ den Durchmessern der Verstärkungselemente der mindestens zwei Arbeitsschichten (41, 43), ausgedrückt in mm.

**3.** Luftreifen (1) nach Anspruch 1 oder 2, **dadurch gekennzeichnet, dass** der von den Verstärkungselementen der mindestens zwei Arbeitsschichten (41, 43) mit der Umfangsrichtung gebildete mittlere Winkel größer als 20° ist.

**4.** Luftreifen (1) nach einem der Ansprüche 1 bis 3, **dadurch gekennzeichnet, dass** die Verstärkungselemente der mindestens zwei Arbeitsschichten (41, 43) nicht dehnbare Verstärkungselemente sind.

**5.** Luftreifen (1) nach einem der Ansprüche 1 bis 4, **dadurch gekennzeichnet, dass** die Verstärkungselemente der mindestens zwei Arbeitsschichten (41, 43) Metallkabel mit gesättigten Schichten sind, die beim so genannten Permeabilitätstest einen Durchsatz von weniger als 5 cm$^3$/mn haben.

**6.** Luftreifen (1) nach einem der vorhergehenden Ansprüche, **dadurch gekennzeichnet, dass** die Verstärkungselemente der mindestens einen Schicht von Umfangsverstärkungselementen (42) über die axiale Breite der mindestens einen Schicht mit einem variablen Abstand verteilt sind.

**7.** Luftreifen (1) nach einem der vorhergehenden Ansprüche, **dadurch gekennzeichnet, dass** die Schicht von Umfangsverstärkungselementen (42) radial zwischen zwei Arbeitsscheitelschichten (41, 43) angeordnet ist.

**8.** Luftreifen (1) nach einem der vorhergehenden Ansprüche, wobei mindestens zwei Arbeitsscheitelschichten (41, 43) unterschiedliche axiale Breiten haben, **dadurch gekennzeichnet, dass** der Unterschied zwischen der axialen Breite der axial breitesten Arbeitsscheitelschicht (41) und der axialen Breite der axial am wenigsten breiten Arbeitsscheitelschicht (43) zwischen 10 und 30 mm liegt.

**9.** Luftreifen (1) nach Anspruch 8, **dadurch gekennzeichnet, dass** die axial breiteste Arbeitsscheitelschicht (41) sich radial innerhalb der anderen Arbeitsscheitelschichten (43) befindet.

**10.** Luftreifen (1) nach einem der vorhergehenden Ansprüche, **dadurch gekennzeichnet, dass** die axialen Breiten der radial der Schicht von Umfangsverstärkungselementen (42) benachbarten Arbeitsscheitelschichten (41, 43) größer sind als die axiale Breite der Schicht von Umfangsverstärkungselementen (42).

**11.** Luftreifen (1) nach Anspruch 10, **dadurch gekennzeichnet, dass** die der Schicht von Umfangsverstärkungselementen (42) benachbarten Arbeitsscheitelschichten (41, 43) zu beiden Seiten der Äquatorialebene und in der direkten axialen Verlängerung der Schicht von Umfangsverstärkungselementen (42) über eine axiale Breite (l) gekoppelt sind, um anschließend durch Profilteile aus Kautschukmischung mindestens über den Rest der den zwei gemeinsamen Arbeitsschichten (41, 43) gemeinsamen Breite entkoppelt zu sein.

**12.** Luftreifen (1) nach einem der vorhergehenden Ansprüche, **dadurch gekennzeichnet, dass** die Verstärkungselemente mindestens einer Schicht von Umfangsverstärkungselementen (42) metallische Verstärkungselemente sind, die einen Sekantenmodul bei 0,7 % Dehnung zwischen 10 und 120 GPa und einen maximalen Tangentenmodul niedriger als 150 GPa Haben.

**13.** Luftreifen (1) nach einem der vorhergehenden Ansprüche, **dadurch gekennzeichnet, dass** die Verstärkungselemente mindestens einer Schicht von Umfangsverstärkungselementen (42) metallische Verstärkungselemente sind, die eine Zugbeanspruchungskurve abhängig von der relativen Dehnung aufweisen, die geringe Steigungen für die geringen Dehnungen und eine im Wesentlichen konstante und starke Steigung für die stärkeren Dehnungen hat.

**14.** Luftreifen (1) nach einem der Ansprüche 1 bis 11, **dadurch gekennzeichnet, dass** die Verstärkungselemente mindestens einer Schicht von Umfangsverstärkungselementen (42) metallische Verstärkungselemente sind, die so geschnitten sind, dass sie Abschnitte einer Länge geringer als der Umfang der am wenigsten langen Lage, aber größer als das 0,1-Fache des Umfangs bilden, wobei die Schnitte zwischen Abschnitten axial zueinander versetzt sind, wobei der Zugelastizitätsmodul pro Breiteneinheit der Schicht von Umfangsverstärkungselementen vorzugsweise niedriger als der Zugelastizitätsmodul, gemessen unter den gleichen Bedingungen, der dehnbarsten Arbeitsscheitelschicht ist.

15. Luftreifen (1) nach einem der Ansprüche 1 bis 11, **dadurch gekennzeichnet, dass** die Verstärkungselemente mindestens einer Schicht von Umfangsverstärkungselementen (42) gewellte metallische Verstärkungselemente sind, wobei das Verhältnis a/λ der Welligkeitsamplitude a zur Wellenlänge λ höchstens gleich 0,09 ist, wobei der Zugelastizitätsmodul pro Breiteneinheit der Schicht von Umfangsverstärkungselementen vorzugsweise niedriger als der Zugelastizitätsmodul, gemessen unter den gleichen Bedingungen, der dehnbarsten Arbeitsscheitelschicht ist.

**Claims**

1. Tyre (1) with a radial carcass reinforcement (2) comprising a crown reinforcement (4) formed of at least two working crown layers (41, 43) of reinforcing elements, crossed from one layer to the other making with the circumferential direction angles of between 10° and 45°, itself capped radially by a tread (5), the said tread being connected to two beads via two sidewalls, the crown reinforcement (4) comprising at least one layer of circumferential reinforcing elements (42), the reinforcing elements of the said at least two working crown layers (41, 43) having a diameter less than 1.1 mm and satisfying the following relationships:

$$(\text{Fr x 4 cos}^2\alpha) / (\text{P x 0.75 Pg x } \varnothing) < 5,$$

**characterized in that** the reinforcing elements of the said at least two working crown layers (41, 43) satisfy the following relationships:

$$\text{Fr}_1 / (\text{P}_1 \text{ x } \sin|\alpha_1|) \geq 1.2 \text{ Fr}_2 / (\text{P}_2 \text{ x } \sin|\alpha_2|)$$

where $\text{Fr}_i$ is the breaking force of the reinforcing elements of layer i measured on reinforcing elements taken from the tyre and expressed in daN,
$\text{Fr} = (\text{Fr}_1 + \text{Fr}_2) / 2$ is the mean breaking force of the said at least two layers,
$\alpha_i$ is the angle formed between the reinforcing elements of the working crown layer i and the circumferential direction at the equatorial plane,
$\alpha = (|\alpha_1| + |\alpha_2|) / 2$ is the mean angle of the said at least two layers,
Pi is the distribution spacing, at the equatorial plane, of the reinforcing elements of the working crown layer i, expressed in mm,
$\text{P} = (\text{P}_1 + \text{P}_2) / 2$ is the mean spacing of the said at least two layers,
Pg is the nominal inflation pressure of the tyre, expressed in $\text{daN/mm}^2$,
$\varnothing$ is the internal diameter of the tyre measured in the equatorial plane and expressed in mm.

2. Tyre (1) according to Claim 1, **characterized in that** the spaces $\text{P}_i$ at which the reinforcing elements of the said at least two working layers are distributed satisfy the relationship:

$$1.6 \text{ d}_i \leq \text{P}_i \leq \text{d}_i + 1.3,$$

where $\text{d}_i$ are the diameters of the reinforcing elements of the said at least two working layers (41, 43), expressed in mm.

3. Tyre (1) according to Claim 1 or 2, **characterized in that** the mean angle formed by the reinforcing elements of the said at least two working layers (41, 43) with the circumferential direction is greater than 20°.

**4.** Tyre (1) according to one of Claims 1 to 3, **characterized in that** the reinforcing elements of the said at least two working layers (41, 43) are inextensible reinforcing elements.

**5.** Tyre (1) according to one of Claims 1 to 4, **characterized in that** the reinforcing elements of the said at least two working layers (41, 43) are metal cords with saturated layers which, on what is known as the permeability test, return a flow rate less than 5 cm$^3$/min.

**6.** Tyre (1) according to one of the preceding claims, **characterized in that** the reinforcing elements of the said at least one layer of circumferential reinforcing elements (42) are distributed over the axial width of the said at least one layer at a spacing that is variable.

**7.** Tyre (1) according to one of the preceding claims, **characterized in that** the layer of circumferential reinforcing elements (42) is arranged radially between two working crown layers (41, 43).

**8.** Tyre (1) according to one of the preceding claims, at least two working crown layers (41, 43) having different axial width, **characterized in that** the difference between the axial width of the axially widest working crown layer (41) and the axial width of the axially narrowest working crown layer (43) is between 10 and 30 mm

**9.** Tyre (1) according to Claim 8, **characterized in that** the axially widest working crown layer (41) is radially on the inside of the other working crown layers (43).

**10.** Tyre (1) according to one of the preceding claims, **characterized in that** the axial widths of the working crown layers (41, 43) radially adjacent to the layer of circumferential reinforcing elements (42) are greater than the axial width of the said layer of circumferential reinforcing elements (42).

**11.** Tyre (1) according to Claim 10, **characterized in that** the working crown layers (41, 43) adjacent to the layer of circumferential reinforcing elements (42) are, on each side of the equatorial plane and in the immediate axial continuation of the layer of circumferential reinforcing elements (42), coupled over an axial width (1) and then uncoupled by profiled elements of rubber compound at least over the remainder of the width that the said two working layers (41, 43) have in common.

**12.** Tyre (1) according to one of the preceding claims, **characterized in that** the reinforcing elements of at least one layer of circumferential reinforcing elements (42) are metal reinforcing elements having a secant modulus at 0.7% elongation of between 10 and 120 GPa and a maximum tangent modulus of less than 150 GPa.

**13.** Tyre (1) according to one of the preceding claims, **characterized in that** the reinforcing elements of at least one layer of circumferential reinforcing elements (42) are metal reinforcing elements having a curve of tensile stress as a function of relative elongation that exhibits shallow gradients for small elongations and a gradient that is steep and substantially constant for higher elongations.

**14.** Tyre (1) according to one of Claims 1 to 11, **characterized in that** the reinforcing elements of at least one layer of circumferential reinforcing elements (42) are metal reinforcing elements cut to form portions of a length less than the circumference of the shortest ply, but greater than 0.1 times the said circumference, the cuts between portions being axially offset from one another, the elastic modulus in tension per unit width of the layer of circumferential reinforcing elements preferably being lower than the elastic modulus in tension, measured under the same conditions, of the most extensible working crown layer.

**15.** Tyre (1) according to one of Claims 1 to 11, **characterized in that** the reinforcing elements of at least one layer of circumferential reinforcing elements (42) are wavy metal reinforcing elements, the ratio a/λ of the wave amplitude a to the wavelength λ being at most equal to 0.09, the elastic modulus in tension per unit width of the layer of circumferential reinforcing elements preferably being less than the elastic modulus in tension, measured under the same conditions, of the most extensible working crown layer.

**FIG.1**

**FIG.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2728510
- WO 9924269 A
- WO 10069676 A
- US 3240249 A
- EP 0730987 A1
- WO 2006013077 A
- WO 2009083212 A
- WO 2010069676 A
- WO 2010115891 A
- WO 2010115892 A